# EUROPÄISCHE PATENTSCHRIFT

(11) **EP 1 868 837 B1**
(45) Veröffentlichungstag und Bekanntmachung des Hinweises auf die Patenterteilung: **18.02.2009**
(21) Anmeldenummer: 06724142.2
(22) Anmeldetag: 07.04.2006
(51) Int. Cl.: B60L 11/18

(54) **ANTRIEBSSYSTEM UND VERFAHREN ZUM BETRIEB EINES ANTRIEBSSYSTEMS FÜR EIN ELEKTRISCH BETRIEBENES FAHRZEUG**
DRIVE SYSTEM AND METHOD FOR OPERATING A DRIVE SYSTEM FOR AN ELECTRICALLY OPERATED VEHICLE
SYSTEME D'ENTRAINEMENT ET PROCEDE D'UTILISATION D'UN SYSTEME D'ENTRAINEMENT DESTINE A UN VEHICULE ELECTRIQUE

(30) Priorität: 08.04.2005 DE 102005016300
(43) Veröffentlichungstag der Anmeldung: 26.12.2007
(73) Patentinhaber: Proton Motor Fuel Cell GmbH, 82319 Starnberg (DE)
(72) Erfinder: WALLNER, Stefan, 82008 Unterhaching (DE)
(74) Vertreter: Klunker . Schmitt-Nilson . Hirsch
(86) Internationale Anmeldenummer: PCT/EP2006/003204
(87) Internationale Veröffentlichungsnummer: WO 2006/105986

(56) Entgegenhaltungen:
- US-A- 6 020 696
- US-A1- 2005 061 561
- US-B1- 6 484 830

## Beschreibung

Die vorliegende Erfindung betrifft ein Antriebssystem für ein elektrisch betriebenes Fahrzeug, das eine motorisch und generatorisch betreibbare elektrische Antriebseinheit, eine erste Stromquellenschaltung mit einer Steuereinrichtung zum Zwecke einer regelbaren Leistungsabgabe, eine zweite ladbare und entladbare Stromquellenschaltung, die parallel zur Antriebseinheit geschaltet ist, sowie einen elektrischen Zwischenkreis aufweist, der mit der ersten und der zweiten Stromquellenschaltung und mit der Antriebseinheit verbunden ist. Ausserdem umfasst das Fahrzeug eine dritte ladbare und entladbare Stromquellenschaltung, die mit dem Zwischenkreis verbunden ist. Weiterhin betrifft die Erfindung ein Verfahren zum Betrieb eines derartigen Antriebssystems.

Elektrisch betriebene Fahrzeuge, insbesondere sog. elektrische Hybridfahrzeuge, weisen ein Antriebssystem auf, das unterschiedliche elektrische Versorgungsschaltungen umfasst, um eine elektrische Antriebseinheit des Fahrzeugs zu betreiben. Die für den Antrieb erforderliche elektrische Energie wird beispielsweise von einer Brenntoffzelle oder von einer Akkumulatorbatterie, die in den Antriebsstrang eines Hybridfahrzeugs geschaltet werden, geliefert. Insbesondere die Verwendung einer Brennstoffzelle, die elektrische Energie aus chemischen Energieträgern erzeugt, in dem Antriebsstrang eines elektrisch betriebenen Fahrzeugs gewinnt zunehmend an Bedeutung. Die Brennstoffzelle ist insbesondere geeignet, die in einem chemischen Stoff enthaltene Energie ohne Umweg in elektrische Energie umzuformen, um beispielsweise mit der gewonnenen elektrischen Energie eine Antriebseinheit eines elektrisch betriebenen Fahrzeugs anzutreiben. Die elektrische Energie der Brennstoffzelle wird im Allgemeinen an eine Versorgungsschaltung des Antriebsstrangs geliefert, insbesondere in Form eines elektrischen Zwischenkreises, der mit der Brennstoffzelle verbunden werden kann. Eine Antriebseinheit des elektrisch betriebenen Fahrzeugs, die einen oder mehrere Elektromotoren umfasst, wird von der Versorgungsschaltung versorgt, um die Antriebsräder des Fahrzeugs anzutreiben. In den meisten Anwendungen kann die Antriebseinheit auch ein elektrisches Bremsen mit Energierückgewinnung ausführen, so dass sie an die Versorgungsschaltung elektrische Energie zurückspeist. Diese Energie kann von anderen Einrichtungen, die an der Versorgungsschaltung angeschlossen sind, verbraucht werden. Beispielsweise kann sie in einer Akkumulatorbatterie oder in einem Schwungradspeicher gespeichert werden. Weiterhin kann eine Sicherheitseinrichtung in Form eines Bremsstellers vorgesehen sein, der dazu bestimmt ist, einen eventuellen Energieüberschuss zu absorbieren, insbesondere in Wärme überzuführen. Somit tauscht die Versorgungsschaltung, beispielsweise in Form eines Spannungszwischenkreises, zu jedem Zeitpunkt unterschiedliche Leistungsflüsse mit den Einrichtungen bzw. Komponenten aus, die mit ihr verbunden sind. Diese Leistungsflüsse ändern sich im Laufe der Betriebszeit aufgrund des Vorherrschens von nur kurz andauernden Betriebszuständen in den Antriebssystemen von Kraftfahrzeugen mitunter erheblich.

Beispielsweise werden bei elektrischen Hybridfahrzeugen mehrere Stromquellen, wie z.B. Akkumulatorbatterien oder Doppelschicht-Kondensatoren (sog. Ultracaps), eingesetzt, da diese zusätzlich elektrische Energie zwischenspeichern können. Somit kann z.B. Bremsenergie rückgewonnen werden oder Spitzenlast aus Zwischenspeichern entnommen werden. Solche Antriebsstränge sind insbesondere für den innerstädtischen "Stop-and-go"-Verkehr geeignet, da sich hier häufige Anfahrvorgänge mit hoher Spitzenlast und häufige Bremsvorgänge mit entsprechender Energierückgewinnung abwechseln.

Bei Fahrzeugen wie z.B. Stadtbussen, Taxen, Lieferwagen, die vornehmlich im innerstädtischen Verkehr betrieben werden, ist der augenblickliche Leistungsbedarf für das Antriebssystem durch die häufigen Brems- und Beschleunigungsvorgänge gekennzeichnet. Da hierbei die zu erzielende Höchstgeschwindigkeit schon von der Gesetzeslage limitiert ist, ist die Leistungsfähigkeit solcher Fahrzeuge vor allem durch entsprechende Beschleunigungsleistung gekennzeichnet. Kann man hierbei die Bremsenergie mit geringen Verlusten aufnehmen und zwischenspeichern, dann lässt sich der Energiebedarf deutlich senken.

In US 2004/0172206 A1 ist ein Steuerungssystem für ein elektrisch betriebenes Fahrzeug beschrieben, das als Stromgenerator eine Brennstoffzelle aufweist. Die Antriebseinheit, bestehend aus Zwischenkreis-Ausgangsschaltung und Antriebsmotor, ist motorisch und generatorisch betreibbar. Die von einem elektrischen Zwischenkreis versorgte Antriebseinheit weist einen Speicherkondensator auf. Der durch die Brennstoffzelle erzeugbare Strom zur Einspeisung in den Zwischenkreis ist durch eine Steuerschaltung einstellbar. Hierbei berechnet eine Berechnungseinheit die von der Antriebseinheit erzeugbare regenerative elektrische Leistung, die im augenblicklichen Betriebszustand zur Verfügung steht, beispielsweise auf Basis der Fahrzeuggeschwindigkeit oder dergleichen. Weiterhin berechnet die Berechnungseinheit die in dem Kondensator speicherbare Leistung, beispielsweise basierend auf einem detektierten Spannungswert des Kondensators. Wenn die in dem Kondensator speicherbare Leistung geringer ist als die regenerative elektrische Leistung, wird der Ausgangsstrom der Brennstoffzelle auf null reduziert, wohingegen in dem Fall, in dem die in dem Kondensator speicherbare Leistung größer ist als die regenerative elektrische Leistung, die Strombegrenzung der Brennstoffzelle wieder aufgehoben wird. Die Stromquelle in Form der Brennstoffzelle wird somit in Abhängigkeit der regenerativen elektrischen Leistung und in Abhängigkeit des Zustands des Kondensators zugeschaltet oder abgeschaltet. Damit kann die Energieeffizienz eines Brennstoffzellen-angetriebenen Fahrzeugs während der Energierückgewinnung verbessert werden. Andere Betriebszustände des Antriebssystems werden hierbei jedoch nicht berücksichtigt.

Aus US 6 484 830 B1 ist ein elektrisches Antriebssystem mit einer ersten und einer zweiten Stromquellenschaltung bekannt, bei dem die Zwischen-Kreisspannung geschwindigkeitsabhängig geregelt wird.

Der vorliegenden Erfindung liegt die Aufgabe zugrunde, ein Antriebssystem und ein Verfahren zum Betrieb eines Antriebssystems für ein elektrisch betriebenes Fahrzeug anzugeben, die es ermöglichen, das Energiemanagement in dem Antriebssystem für mehrere Betriebszustände des Fahrzeugs zu verbessern.

Diese Aufgabe wird gelöst durch ein Antriebssystem für ein elektrisch betriebenes Fahrzeug gemäß Patentanspruch 1 und durch ein Verfahren zum Betrieb eines Antriebssystems für ein elektrisch betriebenes Fahrzeug gemäß Patentanspruch 12.

Das Antriebssystem für ein elektrisch betriebenes Fahrzeug der eingangs genannten Art umfasst gemäß der Erfindung neben den dort bereits genannten Komponenten eine erste Erfassungseinrichtung für eine elektrische Spannung des Zwischenkreises, die mit der Steuereinrichtung der ersten Stromquellenschaltung verbunden ist, sowie eine zweite Erfassungseinrichtung für einen Kennwert der Fahrzeuggeschwindigkeit, die ebenso mit der Steuereinrichtung der ersten Stromquellenschaltung verbunden ist. Die Steuereinrichtung ist derart ausgebildet, dass sie einen veränderbaren Sollwert für eine Spannung des Zwischenkreises in Abhängigkeit des Kennwerts der Fahrzeuggeschwindigkeit einstellt und die Leistungsabgabe der ersten Stromquellenschaltung in Abhängigkeit des Sollwerts und der Spannung des Zwischenkreises einstellt. Mit den Erfassungseinrichtungen können folglich eine elektrische Spannung des Zwischenkreises und ein Kennwert der Fahrzeuggeschwindigkeit erfasst werden. Der Sollwert wird in Abhängigkeit des Kennwerts der Fahrzeuggeschwindigkeit eingestellt, wobei die Spannung des Zwischenkreises dem Sollwert nachgeführt wird, indem die Leistungsabgabe der ersten Stromquellenschaltung entsprechend eingestellt wird.

Erfindungsgemäß kann damit das Antriebssystem eines elektrisch betriebenen Fahrzeugs für unterschiedliche Betriebszustände des Fahrzeugs weitgehend in einem optimalen Energiebetriebszustand gehalten werden. Die Höhe der Zwischenkreisspannung wird durch die Fahrzeuggeschwindigkeit beeinflusst, so dass an der zweiten ladbaren und entladbaren Stromquellenschaltung, die parallel zur Antriebseinheit geschaltet ist, ein entsprechender Spannungswert anliegt. Die zweite Stromquellenschaltung umfasst einen Speicher zur Speicherung von elektrischen Ladungen, insbesondere einen oder mehrere Doppelschicht-Kondensatoren, so daß mit dem Sollwert der Zwischenkreisspannung ein Sollwert der Kondensatorladung eingestellt wird. Damit ist es ermöglicht, den Energieinhalt der zweiten Stromquellenschaltung in Abhängigkeit der Fahrzeuggeschwindigkeit zu beeinflussen. Damit kann für unterschiedliche Betriebszustände von beispielsweise "starker Beschleunigung" auf "hohe Bremsenergierückgewinnung" umgeschaltet werden. Auch alle Betriebszustände dazwischen sind grundsätzlich darstellbar. Das Energiemanagement ist folglich vor allem von den Größen der Zwischenkreisspannung und der Fahrzeuggeschwindigkeit abhängig. In Abhängigkeit dieser Größen greift die Steuerung in die Leistungsfreigabe der ersten Stromquellenschaltung ein, die beispielsweise bei niedriger Zwischenkreisspannung einen höheren Strom in den Zwischenkreis abgibt als bei einer höheren Zwischenkreisspannung. Die Steuerung ist dabei weitgehend von der konkreten elektrischen Verschaltung der Komponenten unabhängig. Die Grenzwerte der Steuerung sind von der Fahrgeschwindigkeit des Fahrzeugs abhängig.

Gemäß einer Ausführungsform der Erfindung wird der Sollwert für die Spannung des Zwischenkreises bei sinkender Fahrzeuggeschwindigkeit erhöht und bei ansteigender Fahrzeuggeschwindigkeit erniedrigt. Somit kann erreicht werden, dass bei niedrigen Fahrzeuggeschwindigkeiten eine höhere Zwischenkreisspannung an der zweiten Stromquellenschaltung anliegt, so dass für den Fall, dass Kondensatoren in der zweiten Stromquellenschaltung zur Speicherung von elektrischer Energie verwendet werden, diese bei niedrigen Fahrzeuggeschwindigkeiten entsprechend stärker aufgeladen sind. Damit steht deren gespeicherte Energie für Beschleunigungsvorgänge des Fahrzeugs zur Verfügung. Andererseits kann bei hohen Fahrzeuggeschwindigkeiten und niedriger Zwischenkreisspannung erreicht werden, dass Kondensatoren in der zweiten Stromquellenschaltung entsprechend weniger aufgeladen sind und somit eine vergleichsweise hohe Bremsenergie aufnehmen können. Da Kondensatoren auch eine hohe Strombelastbarkeit aufweisen, können auf diese Weise vergleichsweise starke Beschleunigungs- und Bremvorgänge durchgeführt werden allein mit Hilfe von in der zweiten Stromquellenschaltung zwischengespeicherter bzw. zwischen zu speichernder Energie.

In einer Weiterbildung der Erfindung stellt die Steuereinrichtung den Sollwert für die Spannung des Zwischenkreises auf einen maximalen Wert ein, wenn das Fahrzeug sich im Stillstand befindet, und auf einen minimalen Wert, wenn die Fahrzeuggeschwindigkeit maximal ist. Dementsprechend besteht ein erhöhtes Beschleunigungsvermögen des Fahrzeugs im Stillstand und eine verbesserte Bremsenergierückgewinnung bei Maximalgeschwindigkeit.

Gemäß der Erfindung ist in dem Antriebssystem weiterhin eine dritte ladbare und entladbare Stromquellenschaltung vorgesehen, die mit dem Zwischenkreis verbunden ist. Die dritte Stromquellenschaltung ist derart mit dem Zwischenkreis verschaltet, dass die dritte Stromquellenschaltung Leistung in den Zwischenkreis einspeist, wenn ein Schwellenwert der Spannung des Zwischenkreises erreicht oder unterschritten wird. Eine derartige Ausführungsform eines Antriebssystems ist besonders vorteilhaft da die zweite Stromquellenschaltung wenigstens einen Kondensator, insbesondere einen Doppelschicht-Kondensator, und die dritte Stromquellenschaltung wenigstens eine Batteriel umfasst. Der Kondensator kann dabei als sog. Sekundenspeicher fungieren, wohingegen die Batterie als sog. Minutenspeicher fungiert, wenn der Schwellenwert der Zwischenkreisspannung erreicht oder unterschritten wird. Auf diese Art wird es weiterhin ermöglicht, die Leistungsabgabe der ersten Stromquellenschaltung weitgehend gleichmäßig zu halten, so dass über die erste Stromquellenschaltung die sog. Grundlast des Antriebssystems bereitgestellt werden kann. Dies ist insbesondere bei Einsatz einer Brennstoffzelle in der ersten Stromquellenschaltung vorteilhaft, die elektrische Leistung mittels einer elektrochemischen Reaktion erzeugt. Es können daher stark wechselnde Betriebszustände der Brennstoffzelle, wie beispielsweise in US 2004/0172206 A1 praktiziert, vermieden werden, so dass es keiner aufwändigen, mit niedriger Reaktionszeit versehenen Steuerung der Zufuhr der chemischen Energieträger bedarf.

In einer vorteilhaften Weiterbildung der Erfindung wird die Ladeleistung der dritten Stromquellenschaltung in Abhängigkeit der Spannung des Zwischenkreises eingestellt. Somit kann die Ladeleistung einer in der dritten Stromquellenschaltung vorgesehenen Batterie in Abhängigkeit der Lastanforderung des Antriebssystems eingestellt werden. Zusätzlich oder alternativ wird die Ladeleistung der dritten Stromquellenschaltung bevorzugt in Abhängigkeit deren Ladezustands eingestellt. Damit kann vermieden werden, dass hohe Ladeströme etwa beim Abbremsen des Fahrzeugs oder hohe Ladeströme von der Brennstoffzelle in die Batterie der dritten Stromquellenschaltung fließen. Damit kann vermieden werden, dass die Lebensdauer der Batterie durch hohe Ladeströme reduziert wird.

Die Erfindung betrifft auch ein Fahrzeug mit einem elektrischen Hybridantrieb umfassend ein erfindungsgemäßes elektrisches Antriebssystem.

Weitere vorteilhafte Aus- und Weiterbildungen der Erfindung sind in den Unteransprüchen angegeben.

Die Erfindung wird im Folgenden anhand der in der Zeichnung dargestellten Figuren, die Ausführungsbeispiele der vorliegenden Erfindung darstellen, näher erläutert. Es zeigen:
- Fig. 1: eine Schaltungsanordnung einer Ausführungsform eines erfindungsgemäßen Antriebssystems für ein elektrisch betriebenes Fahrzeug,
- Fig. 2: eine grafische Darstellung eines beispielhaften Zusammenhangs zwischen Sollwert der Zwischenkreisspannung und der Fahrgeschwindigkeit des Fahrzeugs,
- Fig. 3: eine Zustandstabelle für einen beispielhaften Zusammenhang zwischen Sollwert der Zwischenkreisspannung und der Fahrgeschwindigkeit des Fahrzeugs,
- Fig. 4: ein Flussdiagramm bezüglich der Erfassung und Berechnung von verschiedenen Parametern beim Betrieb eines erfindungsgemäßen Antriebssystems,
- Fig. 5: ein Leistungsflussdiagramm zur Veranschaulichung eines beispielhaften Leistungsflusses zwischen den verschiedenen Komponenten eines erfindungsgemäßen Antriebssystems,
- Figuren 6 - 8: Schaltungsanordnungen von weiteren Varianten eines erfindungsgemäßen Antriebssystems.

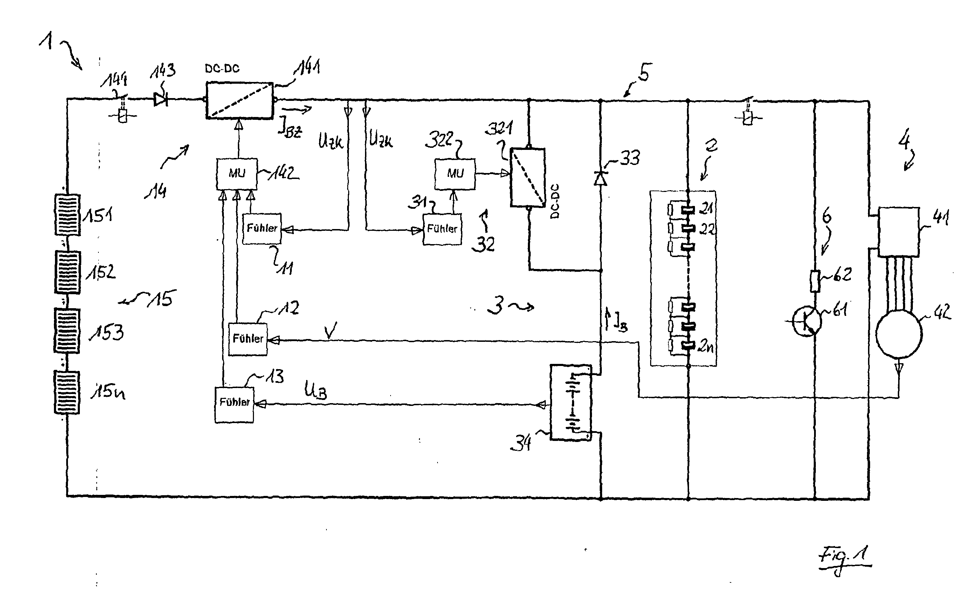

In Fig. 1 ist eine Schaltungsanordnung einer Ausführungsform eines erfindungsgemäßen Antriebssystems für ein elektrisch betriebenes Fahrzeug in Form eines sog. elektrischen Hybridfahrzeugs dargestellt. Ein Zwischenkreis 5 dient vorwiegend als Versorgungsschaltung für eine Antriebseinheit 4, die einen oder mehrere Elektromotoren umfasst. Der in Fig. 1 gezeigte Elektromotor 42 der Antriebseinheit 4 wird von einem Wandler 41 angesteuert, der die Gleichspannung des Zwischenkreises 5 in ein Wechselspannungssystem für den Antrieb des Elektromotors 42 umwandelt. Als Antriebsmotor wird beispielsweise eine permanenterregte Synchronmaschine verwendet, in deren Statorwicklung ein Drehspannungssystem zum Aufbau eines Drehfeldes eingespeist wird. Im umgekehrten Fall des generatorischen Betriebs der Antriebsmaschine 42 wird die generatorisch erzeugte Leistung durch den Wandler 41 in den Zwischenkreis 5 eingespeist. Die Antriebsmaschine 42 dient zum Antrieb der Antriebsräder des Fahrzeugs, wobei im generatorischen Betrieb der Antriebsmaschine 42 auf die Antriebsräder eine entsprechende Bremskraft ausgeübt wird. Werden mehrere Antriebsmaschinen verwendet, so sind diese beispielsweise direkt auf den Radnaben des Fahrzeugs platziert.

Zur Versorgung der Antriebseinheit 4 mit elektrischer Energie dienen mehrere Stromquellenschaltungen, wie im Folgenden beschrieben. Eine erste Stromquellenschaltung 1 umfasst im vorliegenden Ausführungsbeispiel eine Brennstoffzellenanordnung 15 mit mehreren Brennstoffzellen 151 bis 15n. Eine Brennstoffzelle ist eine elektrochemische Zelle, welche die Reaktionsenergie eines kontinuierlich zugeführten Brennstoffs und eines Oxidationsmittels in nutzbare elektrische Energie umwandelt. Grundsätzlich besteht eine Brennstoffzelle aus zwei Elektroden, die durch eine Membran oder einen Elektrolyt voneinander getrennt sind. Die Anode (Pluspol) wird mit dem Brennstoff umspült, der dort oxidiert wird, wohingegen die Kathode (Minuspol) mit dem Oxidationsmittel umspült wird, das dort reduziert wird. Um eine höhere Spannung zu erhalten, können mehrere Zellen zu einem sog. Stack in Reihe geschaltet werden, wie im vorliegenden Ausführungsbeispiel nach Fig. 1.

Die Stromquellenschaltung 1 umfasst weiterhin eine Steuereinrichtung 14, mit der die Leistungsabgabe der Brennstoffzellenanordnung 15 geregelt werden kann. Die Steuereinrichtung 14 umfasst dabei einen DC-DC-Wandler 141, dem eine Diode 143 und ein Schalter 144 vorgeschaltet sind. Mit dem Wandler 141 wird der Strom I_{BZ} der Brennstoffzellenanordnung 15 in den Zwischenkreis 5 eingespeist.

Weiterhin umfasst das Antriebssystem eine zweite ladbare und entladbare Stromquellenschaltung 2, die parallel zur Antriebseinheit 4 geschaltet ist. Die zweite Stromquellenschaltung 2 umfasst mehrere Speicher zur Speicherung von elektrischen Ladungen, insbesondere einzelne Doppelschicht-Kondensatoren 21 bis 2n (sog. Ultracaps), die in Reihe geschaltet sind. Ultracaps zeichnen sich dabei durch eine größere Energiedichte im Vergleich zu herkömmlichen Kondensatoren aus. Die Elektroden der Ultracaps speichern die Energie elektrostatisch, im Gegensatz zu Batterien oder Akkumulatorbatterien, die elektrische Energie chemisch erzeugen bzw. speichern. Je nach Anforderung (Kapazität, Spannungsfestigkeit, Klemmenspannung) können die einzelnen Kondensatoren in Reihe und/oder parallel geschaltet werden. Ein Doppelschicht-Kondensator mit passender Größe ist für die vorliegende Speicheraufgabe hinsichtlich der Leistungsfähigkeit und Kosten gut geeignet. Auch die benötigte Standzeit dieser Komponente ist für den Stop-and-go-Verkehr eines Fahrzeugs bestens geeignet. Sein elektrisches Verhalten lässt es zu, einen Doppelschicht-Kondensator als sog. Sekundenspeicher zur Abgabe bzw. Aufnahme kurzzeitiger hoher Ströme in einem Antriebssystem zu verwenden.

Insbesondere zur Unterstützung der Brennstoffzellenanordnung 15 speziell bei Höchstgeschwindigkeit des Fahrzeugs oder an Bergstrecken wird eine dritte Stromquellenschaltung 3 vorgesehen, die eine Anordnung einer oder mehrerer Batterien 34 umfasst. Die Batterie 34 gemäß Fig. 1 ist über einen DC-DC-Wandler 321 einer Regelschaltung 32 mit dem Zwischenkreis 5 verbunden. Die Regelschaltung 32 ist insbesondere für die Einstellung der Ladeleistung der Batterie 34 vorgesehen. Eine Diode 33 ist in Durchlassrichtung zwischen die Stromquelle in Form der Batterie 34 und den Zwischenkreis 5 geschaltet, wobei die Regelschaltung 32 parallel zur Diode 33 zwischen die Batterie 34 und den Zwischenkreis 5 geschaltet ist. Die Batterie 34 dient aufgrund ihrer Charakteristik als sog. Minutenspeicher zur Unterstützung der Brennstoffzelle in den genannten Betriebszuständen.

Gemäß Fig. 1 ist somit ein Antriebssystem für ein elektrisch betriebenes Fahrzeug verfügbar, das in unterschiedlichen Betriebszuständen des Fahrzeugs unterschiedlichen Anforderungen im Hinblick auf das Energiemanagement nachkommen kann. Zum Antrieb des Fahrzeugs treibt die elektrische Antriebsmaschine 42 die Antriebsräder an, wie beschrieben, wohingegen die Antriebsmaschine 42 beim Abbremsen des Fahrzeugs als Generator arbeitet und im Bremsmodus Strom erzeugt. Der Strom aus dem Bremsmodus wird in der Batterie 34 bzw. den Ultracaps 21 bis 2n zwischengespeichert, bis die Ladekapazität erreicht wird. Erst bei vollen Speichern wird die restliche Bremsleistung in einem Bremssteller 6 thermisch vernichtet. Dieser Bremssteller 6 weist vorliegend einen Bremswiderstand 62 und einen Leistungsschalter 61 auf.

Das Antriebssystem gemäß vorliegender Erfindung umfasst weiterhin mehrere Erfassungseinrichtungen für unterschiedliche Parameter. Eine erste Erfassungseinrichtung 11 in Form eines Messfühlers dient zur Erfassung einer elektrischen Spannung U_{ZK} des Zwischenkreises 5, eine zweite Erfassungseinrichtung 12 ebenfalls in Form eines Messfühlers dient zur Erfassung eines Kennwerts der Fahrzeuggeschwindigkeit v. Der Kennwert für die Fahrzeuggeschwindigkeit v kann auf unterschiedliche Art gewonnen werden bzw. unterschiedliche Messgrößen repräsentieren: Gemäß vorliegendem Ausführungsbeispiel wird zur Erfassung eines Kennwerts für die Fahrzeuggeschwindigkeit ein Drehzahlsignal der Antriebsmaschine 42 verarbeitet. In einer anderen Ausführungsform kann stattdessen ein Signal der Geschwindigkeitsanzeige des Fahrzeugs (Tachometersignal) weiterverarbeitet werden. Für die zu erfüllenden Steuerungsaufgaben ist es ausreichend, ein Signal in einer Form zu verarbeiten, die direkt oder indirekt Rückschlüsse auf die Fahrgeschwindigkeit zulässt.

Es ist weiterhin eine dritte Erfassungseinrichtung 13 vorgesehen, die einen Ladezustand der Stromquellenschaltung 3 erfasst, insbesondere den Ladezustand der Batterie 34. Der Ladezustand wird bei Bleibatterien durch die Leerlaufspannung und bei anderen Batterien durch Strommessung und Bilanzierung der Ströme, die in die bzw. aus der Batterie fließen, bestimmt. Für den vorliegenden Fall der Verwendung einer Bleibatterie wird aus der Batterie 34 der Erfassungseinrichtung 13 in Form eines Messfühlers die Batteriespannung U_{B} zugeführt.

Die Erfassungseinrichtungen 11 bis 13 sind mit einem Messumformer (MU) 142 der Steuereinrichtung 14 verbunden. Der Messumformer 142 dient zur Ansteuerung des Wandlers 141. Weiterhin ist ein Messumformer 322 der Regelschaltung 32 vorgesehen, um den Wandler 321 für die Steuerung der Ladeleistung der Batterie 34 anzusteuern, Die Regelschaltung 32, insbesondere der Messumformer 322, ist mit der Erfassungseinrichtung 31 zur Erfassung der Zwischenkreisspannung U_{ZK} verbunden, wobei die Erfassungseinrichtung 31 separat oder in Einheit mit der Erfassungseinrichtung 11 ausgeführt sein kann.

Die insbesondere durch den Messumformer 142, der beispielsweise einen Mikroprozessor enthält, und den Wandler 141 gebildete Steuereinrichtung 14 ist derart ausgebildet, dass sie einen veränderbaren Sollwert U_{ZKsoll} für die Spannung des Zwischenkreises in Abhängigkeit des Kennwerts der Fahrzeuggeschwindigkeit v einstellt und die Leistungsabgabe der Stromquellenschaltung 1, insbesondere den Strom I_{BZ}, in Abhängigkeit des Sollwerts U_{ZKsoll} und der Spannung U_{ZK} des Zwischenkreises einstellt. Mit anderen Worten, es wird die elektrische Spannung U_{ZK} des Zwischenkreises und ein Kennwert der Fahrzeuggeschwindigkeit v erfasst, wobei der Sollwert U_{ZKsoll} in Abhängigkeit des Kennwerts der Fahrzeuggeschwindigkeit v eingestellt wird. Indem die Leistungsabgabe der Brennstoffzellenanordnung 15 entsprechend eingestellt wird, wird die Spannung U_{ZK} des Zwischenkreises dem Sollwert U_{ZKsoll} nachgeführt.

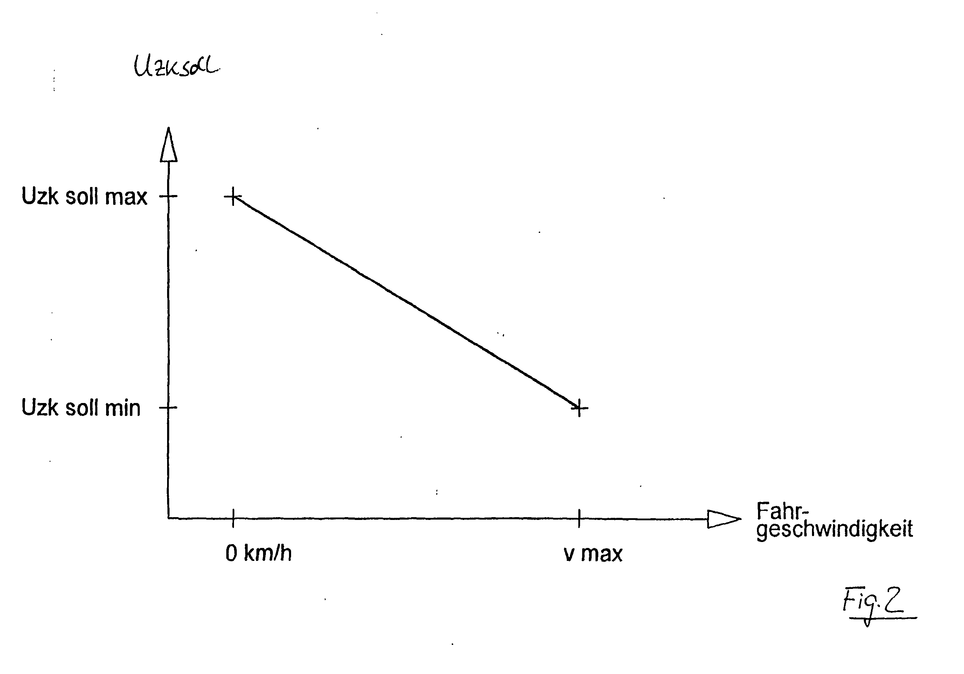

Ein beispielhafter Zusammenhang zwischen dem Sollwert der Zwischenspannung und der Fahrzeuggeschwindigkeit ist in Fig. 2 grafisch dargestellt. Hier wird der Sollwert U_{ZKsoll} für die Spannung des Zwischenkreises entlang einer linearen Kennlinie in Abhängigkeit der Fahrzeuggeschwindigkeit v eingestellt, wobei der Sollwert U_{ZKsoll} bei sinkender Fahrzeuggeschwindigkeit v erhöht und bei ansteigender Fahrzeuggeschwindigkeit v erniedrigt wird. Entsprechend stellt die Steuereinrichtung 14 den Sollwert U_{ZKsoll} auf einen maximalen Wert U_{ZKsoll max} ein, wenn das Fahrzeug sich im Stillstand befindet, und auf einen minimalen Wert U_{ZKsoll min}, wenn die Fahrzeuggeschwindigkeit maximal ist (vₘₐₓ). Zwischen dem maximalen und dem minimalen Wert wird der Sollwert entlang einer linearen Kennlinie in Abhängigkeit der Fahrzeuggeschwindigkeit v eingestellt. Es sind hierbei jedoch auch beliebig andere Verläufe eines Sollwerts in Abhängigkeit der Fahrzeuggeschwindigkeit v denkbar, um unterschiedlichen Lastanforderungen, beispielsweise zusätzlich einem veränderten Fahrzeuggewicht, nachkommen zu können.

Im Folgenden soll die beschriebene Steuerungscharakteristik der Steuereinrichtung 14 und das damit einhergehende verbesserte Energiemanagement des Antriebssystems gemäß der Erfindung an einem Beispiel erläutert werden:

Wenn die Antriebsmaschine 42 Leistung fordert, geben die Ultracaps 21 bis 2n entsprechend ihrer Charakteristik Energie ab, und die Zwischenkreisspannung U_{ZK} sinkt unter den Sollwert U_{ZKsoll}. Je niedriger die Zwischenkreisspannung U_{ZK} wird, umso mehr Leistung wird aus der Brennstoffzellenanordnung freigeschaltet bis zum maximalen Strom I_{BZ max}. Die Steuerung schaltet Leistung der Brennstoffzellenanordnung frei, und der Strom I_{BZ} fließt in den Zwischenkreis 5, um die Zwischenkreisspannung U_{ZK} wieder auf den Sollwert zu bringen. Dies erfolgt solange, bis sich ein Gleichgewicht einstellt oder der maximale Strom I_{BZ max} erreicht ist. Sinkt U_{ZK} weiter ab, bis zu einer unteren Schwelle U_{Bmax,} wird die Batterie 34 aktiv und liefert die fehlende Energiemenge entsprechend der angeforderten Leistung. Die Zwischenkreisspannung U_{ZK} ist folglich ein Maß für die abgeforderte Leistung. Die Zwischenkreisspannung U_{ZK} ist ein Maß für den Energieinhalt der Ultracaps 21 bis 2n und somit für die Kondensatorladung.

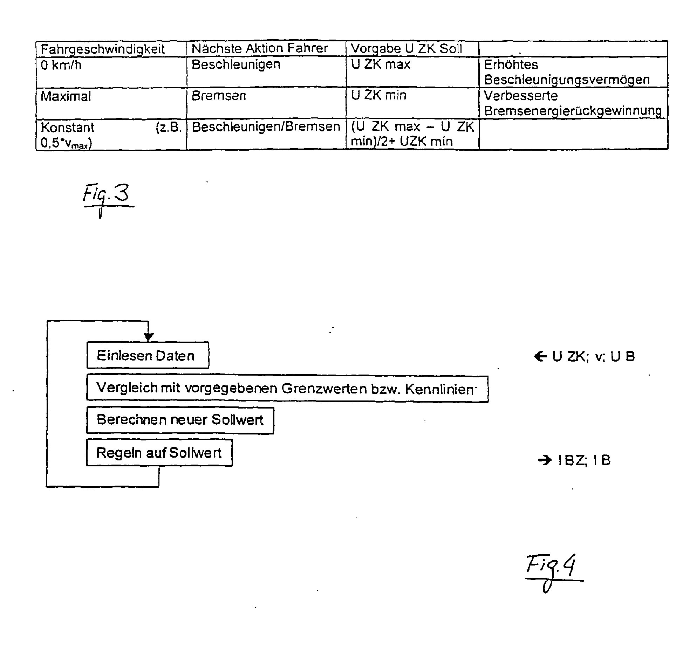

Erfindungsgemäß soll die Steuerung des Antriebssystems für unterschiedliche Betriebszustände ein optimales Energiemanagement bieten. Aus diesem Grund wird der Sollwert der Kondensatorladung und damit die Zwischenkreisspannung durch die Fahrgeschwindigkeit beeinflusst. Damit wird für unterschiedliche Betriebszustände von "starker Beschleunigung" auf "hohe Bremsenergierückgewinnung" umgeschaltet. Auch alle Zustände dazwischen sind darstellbar. Fig. 3 zeigt in diesem Zusammenhang eine Zustandstabelle für einen beispielhaften Zusammenhang zwischen Sollwert der Zwischenkreisspannung und der Fahrgeschwindigkeit.

Fig. 4 zeigt ein Flussdiagramm bezüglich der Erfassung und der Berechnung der verschiedenen Parameter beim Betrieb des erfindungsgemäßen Antriebssystems. Zunächst werden die Parameter Zwischenkreisspannung U_{ZK}, Kennwert der Fahrgeschwindigkeit v, und Batteriespannung U_{B} eingelesen. Danach wird ein Vergleich mit den vorgegebenen Grenzwerten bzw. Kennlinien durchgeführt. Anschließend wird der neue Sollwert der Zwischenkreisspannung U_{ZKsoll} berechnet. Anschließend wird die Spannung U_{ZK} des Zwischenkreises dem Sollwert U_{ZKsoll} nachgeführt, wobei der Strom I_{BZ} der Brennstoffzellenanordnung entsprechend eingestellt wird, und für den Fall, dass dieser nicht ausreicht, wird zusätzlich Strom I_{B} aus der Batterie in den Zwischenkreis eingespeist.

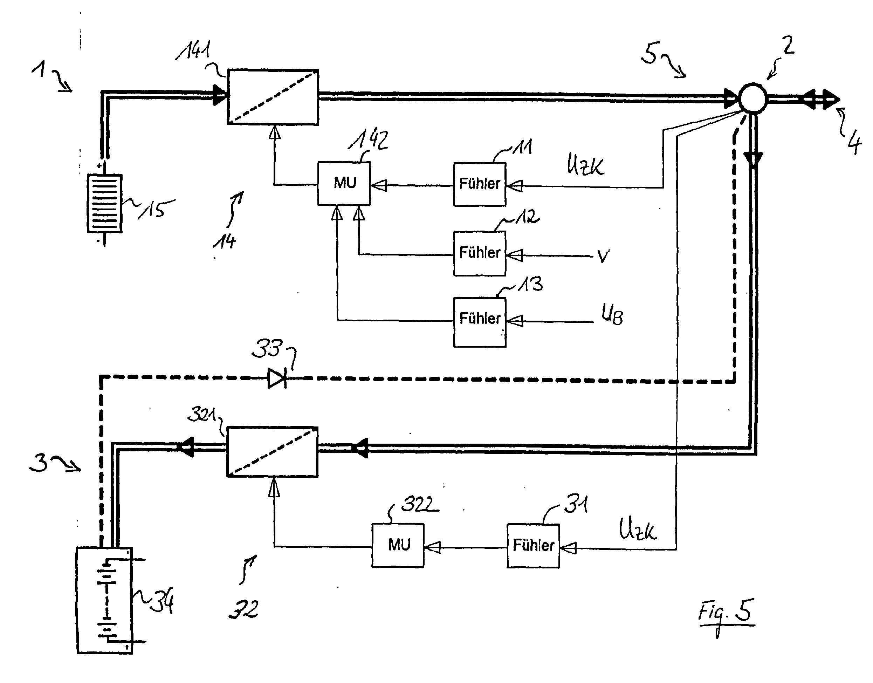

In Fig. 5 ist ein Flussdiagramm zur Veranschaulichung eines beispielhaften Leistungsflusses zwischen den verschiedenen Komponenten des erfindungsgemäßen Antriebssystems gemäß Fig. 1 gezeigt. Im oben beschriebenen Beispiel erfolgt das Aufladen der Batterie 34 und der Ultracaps 21 bis 2 n ungesteuert, so dass hohe Ladeströme beim Bremsen oder von der Brennstoffzelle in die Batterie fließen können. Hierbei reduzieren hohe Ladeströme jedoch die Lebensdauer der Batterie. Deshalb wird in Abhängigkeit des Ladezustands der Batterie deren Ladestrom geregelt. Entsprechend dem Ladezustand schaltet die Regelschaltung 32 den Wandler 321 frei. Der Ladestrom hängt von der aktuellen Lastanforderung und damit von U_{ZK} ab. Je näher U_{ZK} an U_{ZKsoll} ist, desto höher kann der Ladestrom eingestellt werden.

Damit ist das Energiemanagement für das Antriebssystem gemäß der Ausführungsform nach Fig. 1 folglich nur von drei zu messenden Größen abhängig: Zwischenkreisspannung U_{ZKsoll}, Geschwindigkeit des Fahrzeugs v (Lastanforderung) und Ladezustand der Batterie. Die Steuerung greift aktiv nur in die Leistungsfreigabe der Brennstoffzellenanordnung und des Ladereglers der Batterie ein. Die Grenzwerte der Steuerung sind von der Fahrgeschwindigkeit des Fahrzeugs abhängig.

Das der erfindungsgemäßen Steuerung zugrunde liegende Prinzip ist, dass je mehr der Kondensator oder die Kondensatoren in der Stromquellenschaltung 2 entladen werden, die Leistung des Wandlers der Stromquellenschaltung 1 entsprechend gesteigert wird. Bei maximaler Zwischenkreisspannung ist die Leistung aus der Brennstoffzellenanordnung entspechend der Ladeleistung der Batterie. Wird Energie aus dem Kondensatorspeicher entnommen, dann wird die Zwischenkreisspannung kleiner, und die Leistung der Brennstoffzellenanordnung wird hochgefahren bei gleichzeitiger Rücknahme der Ladeleistung der Batterie, bis sie an ihre maximale Leistungsfähigkeit ankommt. Um zu verhindern, dass bei längeren leichten Bergabfahrten die Kondensatoren wieder vollständig aufgeladen werden (da keine oder geringe Leistungsentnahme), verschiebt das Geschwindigkeitssignal die Grenzwerte der Zwischenkreisspannung für 0% und 100% Brennstoffzellen-Leistungsentnahme nach unten, so dass bei längeren Bergabfahrten verhindert wird, dass die Brennstoffzellenanordnung Energie ins Antriebssystem einspeist. Zusätzlich wird durch die Steuereinrichtung 14 die Leistungsabgabe derart eingestellt, dass die Leistungsabgabe reduziert wird, je höher die gespeicherte Ladung in der Batterie 34 ist. Damit wird die Leistung der Brennstoffzellenanordnung reduziert, je voller die Batterie ist. Maß für den Ladezustand der Batterie ist vorliegend deren Leerlaufspannung.

Vor dem Einschalten der Brennstoffzelle sind die Kondensatoren der Stromquellenschaltung 2 auf die Nennspannung der Batterie 34 aufgeladen. Dies entspricht dem niedrigen Energieniveau des Speichers. Die Höhe der elektrischen Spannung am Speicher kennzeichnet den nutzbaren Energieinhalt. Die Brennstoffzellenanordnung kann nun einfach gestartet werden, da aus der Batterie bzw. Batterieanordnung ausreichend Leistung für die Versorgung der Medien zur Verfügung steht. Nach Freigabe der Brennstoffzellenanordnung werden die Doppelschicht-Kondensatoren auf den maximalen Wert entsprechend der hinterlegten Regelcharakteristik aufgeladen. Grundsätzliches Bestreben ist hierbei, wie vorstehend beispielhaft beschrieben, im Stillstand des Fahrzeugs den Speicher möglichst voll zu haben, um für den Beschleunigungsvorgang die volle Unterstützung zu gewährleisten. Bei Erreichen der maximalen Geschwindigkeit des Fahrzeugs muss der Speicher bis auf die Batteriespannung entleert sein, um Energie beim nächsten Bremsvorgang aufnehmen zu können.

Das Regelverhalten der Regelschaltung 32 gemäß Fig. 1 lässt sich wie folgt charakterisieren: Zum Einen dient die Zwischenkreisspannung U_{ZK} als Regelgröße für die Batterieladeleistung. Hierbei ist Grundprinzip, dass je mehr die Kondensatoren geladen sind, die Leistung des Wandlers 321 entsprechend hochgefahren wird. Bei maximaler Zwischenkreisspannung U_{ZK} ist die Batterieladeleistung 100%. Wird Energie aus den Kondensatoren der Stromquellenschaltung 2 entnommen, dann wird die Spannung kleiner, und die Batterieladeleistung wird beispielsweise linear heruntergefahren, bis diese dann null ist. Dabei wird der Einfluss des Ladezustands der Batterie berücksichtigt. Der maximale Ladestrom wird entsprechend dem Ladezustand der Batterie nach unten eingestellt. Das bedeutet, je voller die Batterie, umso niedriger der Ladestrom bzw. die Batterieladeleistung. Ferner wird der Einfluss der Gasungsspannung berücksichtigt, die in jedem Fall bei Verwendung von Bleibatterien 2,4 V pro Zelle nicht überschreiten darf.

Mit dem vorliegenden Antriebssystem gemäß der Erfindung können folgende Notfahreigenschaften erzielt werden: Falls aufgrund einer Störung die Brennstoffzellenanordnung sich abschaltet, steht immerhin noch das restliche elektrische Antriebssystem uneingeschränkt zur Verfügung. Die Bremsenergie kann weiterhin von den Kondensatoren aufgenommen werden. Die Batterie bzw. Batterieanordnung muss allerdings deutlich höhere Leistungen zur Verfügung stellen, was insbesondere eine höhere thermische Belastung zur Folge hat. Die Reichweite des Fahrzeugs ist aufgrund des beschränkten Energieinhalts der Batterie auch sehr begrenzt.

Sind die Kondensatoren der Stromquellenschaltung 2 so weit entladen, dass die Zwischenkreisspannung U_{ZK} auf die Höhe der Batterienennspannung abgesunken ist, dann haben diese hahezu ihre gesamte nutzbare Energie zur Verfügung gestellt (die Batterie speist ins System ein und das System folgt der Batteriespannung, zusätzlich wird von den Kondensatoren Leistung frei und zwar entsprechend der Differenz zwischen der Leerlaufspannung der Batterie und der Batteriespannung bei Volllast). Bei Erreichen dieses Betriebszustands wird die Brennstoffzellenanordnung an ihre maximale Leistungsfähigkeit gesteuert. Jeder Mehrbedarf an Leistung kann dann von der Batterie 34 direkt über die Leistungsdiode 33 in den Zwischenkreis 5 abgegeben werden.

Sind die Kondensatoren völlig entladen (Auslieferungszustand oder nach langer Stillstandzeit bei abgeklemmter Batterie), dann kann über einen Vorladewiderstand die Kondensatoranordnung von der Batterie auf Batteriespannung geladen werden. Der Vorladewiderstand, der den oberen Anschluss der Batterie 34 mit dem oberen Anschluss der Kondensatoranordnung 2 verbindet, ist in Fig. 1 der Übersichtlichkeit halber nicht dargestellt.

Bei einem Antriebssystem gemäß der Erfindung ergibt sich außerdem noch folgender Zusatznutzen: Bei ausgeschalteter Brennstoffzellenanordnung steht ausreichend Energie z.B. für Nebenverbraucher wie Beleuchtung, Fahranzeigen und Ähnliches bei längeren Aufenthalten zur Verfügung. Um einen Frostschutz zu realisieren, kann die Batterieleistung genutzt werden, Teilbereiche der Brennstoffzellenanordnung so zu heizen, dass diese über 0°C verbleiben.

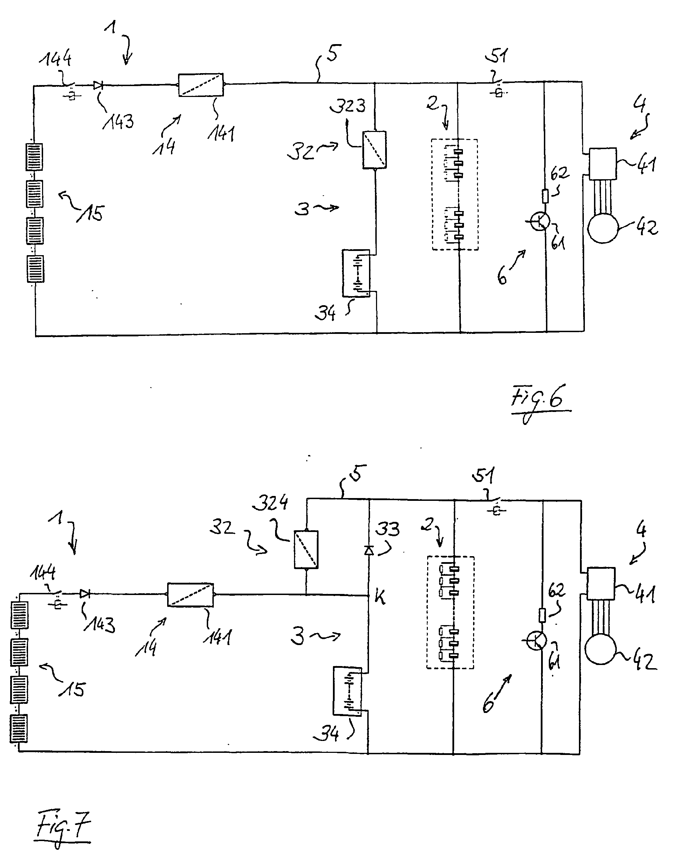

In Fig. 6 ist eine Schaltungsanordnung einer weiteren Variante eines erfindungsgemäßen Antriebssystems gegenüber der Schaltungsanordnung nach Fig. 1 gezeigt. Die Stromquellenschaltung 3 weist eine Regelschaltung 32 für die Ladeleistung mit einem Wandler 323 auf, der zwischen die Batterie 34 und den Zwischenkreis 5 geschaltet ist. Die übrige Verschaltung des Antriebssystems ist mit der Schaltungsanordnung gemäß Fig. 1 übereinstimmend. Der Übersichtlichkeit halber sind in Fig. 6 die Erfassungseinrichtungen mit den entsprechenden Messfühlern und die Messumformer, die die Wandler 141 und 323 ansteuern, nicht dargestellt. Die Regelschaltung 32 ist derart ausgebildet, dass eine Einspeisung von der Batterie 34 in den Zwischenkreis 5 geregelt in Abhängigkeit des Ladezustands der Stromquellenschaltung 2 erfolgt. Der Wandler 323 arbeitet in bidirektionaler Weise, wobei die Leistungsfähigkeit des Wandlers in Richtung Leistungsabgabe aus der Batterie 34 entsprechend hoch sein muss. Ein weiterer Vorteil der Schaltung gemäß Fig. 6 besteht darin, dass mit der bidirektionalen Steuerungsmöglichkeit des Wandlers 323 ein zusätzlicher Freiheitsgrad beim Energiemanagement des Antriebssystems gewonnen wird.

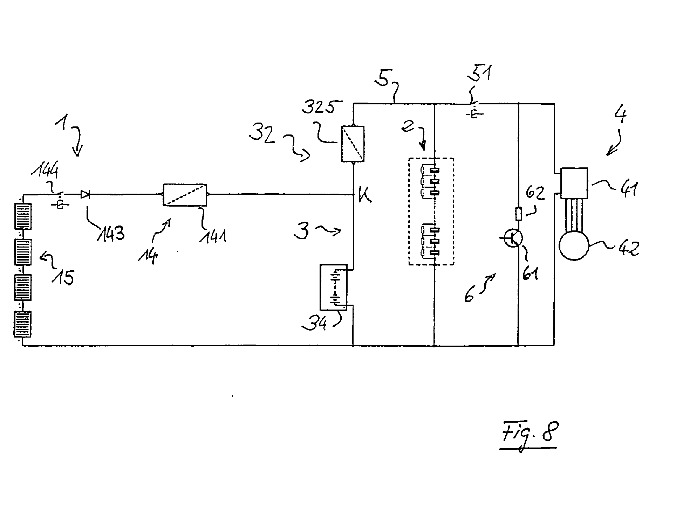

In Fig. 7 ist eine weitere Variante einer Schaltungsanordnung eines erfindungsgemäßen Antriebssystems gegenüber der Schaltungsanordnung nach Fig. 1 gezeigt. Hierbei ist die Stromquellenschaltung 1 an dem Verbindungsknoten K zwischen der Batterie 34 und der Diode 33 angeschlossen. Die Erfassungseinrichtungen mit den Messumformern sind in Fig. 7, wie auch nachfolgend in Fig. 8, der Übersichtlichkeit halber nicht dargestellt. Vom Wandler 324 muss der Energiefluss der Brennstoffzellenanordnung 15 in Richtung der Stromquellenschaltung 2 mit den Kondensatoren mitübernommen werden. Hingegen ist beim Laden der Batterie 34 aus der Brennstoffzellenanordnung 15 der Weg über den Wandler 324 nicht mehr notwendig. Insgesamt kann mit dieser Anordnung die Brennstoffzellenanordnung 15 kleiner dimensioniert werden, wobei die Batterie 34 stärker arbeiten soll. Wiederum wird ein zusätzlicher Freiheitsgrad gewonnen, indem eine solche Betriebsweise über den Wandler 324 justiert wird.

In Fig. 8 ist eine weitere Variante einer Schaltungsanordnung eines erfindungsgemäßen Antriebssystems gegenüber der Schaltungsanordnung nach Fig. 6 gezeigt. Die Stromquellenschaltung 1 ist an dem Verbindungsknoten K zwischen Batterie 34 und der Regelschaltung 32 mit dem Wandler 325 angeschlossen. Der Wandler 325 arbeitet in bidirektionaler Weise. Von diesem Wandler muss der Energiefluss der Brennstoffzellenanordnung 15 in Richtung Zwischenkreis 5 mitübernommen werden. Hingegen ist beim Laden der Batterie 34 aus der Brennstoffzellenanordnung 15 der Weg über den Wandler 325 nicht mehr notwendig. Die Einspeisung von der Batterie 34 in den Zwischenkreis 5 kann jetzt geregelt in Abhängigkeit des Ladezustands der Kondensatoren der Stromquellenschaltung 2 erfolgen. Die Leistungsfähigkeit des Wandlers 325 in Richtung Leistungsabgabe aus der Batterie 34 muss auch entsprechend hoch sein. Insgesamt kann auch mit dieser Anordnung die Brennstoffzellenanordnung 15 kleiner dimensioniert werden, wobei die Batterie 34 stärker arbeiten soll.

## Patentansprüche

1. Antriebssystem für ein elektrisch betriebenes Fahrzeug, umfassend:
- eine motorisch und generatorisch betreibbare elektrische Antriebseinheit (4),
- eine erste Stromquellenschaltung (1) mit einer Steuereinrichtung (14) zum Zwecke einer regelbaren Leistungsabgabe,
- eine zweite ladbare und entladbare Stromquellenschaltung (2) mit wenigstens einem Kondensator (21), die parallel zur Antriebseinheit (4) geschaltet ist,
- einen elektrischen Zwischenkreis (5), der mit der ersten und der zweiten Stromquellenschaltung (1, 2) und mit der Antriebseinheit (4) verbunden ist,
- eine dritte ladbare und entladbare Stromquellenschaltung (3) mit wenigstens einer Batterie (34), die mit dem Zwischenkreis (5) verbunden ist,
- eine erste Erfassungseinrichtung (11) für eine elektrische Spannung (U_{ZK}) des Zwischenkreises, die mit der Steuereinrichtung (14) verbunden ist,
- eine zweite Erfassungseinrichtung (12) für einen Kennwert der Fahrzeuggeschwindigkeit (v), die mit der Steuereinrichtung (14) verbunden ist,
- bei dem die Steuereinrichtung (14) derart ausgebildet ist, dass sie einen veränderbaren Sollwert (U_{ZKsoll}) für eine Spannung des Zwischenkreises in Abhängigkeit des Kennwertes der Fahrzeuggeschwindigkeit (v) einstellt und die Leistungsabgabe der ersten Stromquellenschaltung (1) in Abhängigkeit des Sollwerts (U_{ZKsoll}) und der Spannung (U_{ZK}) des Zwischenkreises einstellt,
- bei dem die dritte Stromquellenschaltung (3) derart mit dem Zwischenkreis (5) verschaltet ist, dass die dritte Stromquellenschaltung (3) Leistung in den Zwischenkreis (5) einspeist, wenn ein Schwellenwert (U_{Bmax}) der Spannung (U_{ZK}) des Zwischenkreises erreicht oder unterschritten wird.

2. Antriebssystem nach Anspruch 1, bei dem die Steuereinrichtung (14) den Sollwert (U_{ZBsool}) für die Spannung des Zwischenkreises bei sinkender Fahrzeuggeschwindigkeit (v) erhöht und bei ansteigender Fahrzeuggeschwindigkeit (v) erniedrigt.

3. Antriebssystem nach Anspruch 1 oder 2, bei dem die Steuereinrichtung (14) den Sollwert (U_{ZKsoll}) für die Spannung des Zwischenkreises auf einen maximalen Wert (max) einstellt, wenn das Fahrzeug sich im Stillstand befindet, und auf einen minimalen Wert (min) einstellt, wenn die Fahrzeuggeschwindigkeit (v) maximal ist.

4. Antriebssystem nach Anspruch 3, bei dem die Steuereinrichtung (14) zwischen dem maximalen und dem minimalen Wert (max, min) einen Sollwert (U_{ZK-soll}) entlang einer linearen Kennline in Abhängigkeit des Kennwertes der Fahrzeuggeschwindigkeit (v) einstellt.

5. Antriebssystem nach einem der Ansprüche 1 bis 4, bei dem
- die erste Stromquellenschaltung (1) wenigstens eine Brennstoffzelle (15) umfasst, die elektrische Leistung mittels einer elektrochemischen Reaktion erzeugt,
- die zweite Stromquellenschaltung (2) einen Speicher zur Speicherung von elektrischen Ladungen umfasst.

6. Antriebssystem nach einem der Ansprüche 1 bis 5, bei dem
- eine dritte Erfassungseinrichtung (13) vorgesehen ist, die einen Ladezustand der dritten Stromquellenschaltung (3) erfasst und die mit der Steuereinrichtung (14) verbunden ist,
- die Steuereinrichtung (14) die Leistungsabgabe derart einstellt, dass die Leistungsabgabe reduziert wird je höher die gespeicherte Ladung in der dritten Stromquellenschaltung (3) ist.

7. Antriebssystem nach einem der Ansprüche 1 bis 6, bei dem die dritte Stromquellenschaltung (3) eine Regelschaltung (32) für die Ladeleistung aufweist, die mit der ersten Erfassungseinrichtung (11, 31) verbunden ist und die die Ladeleistung in Abhängigkeit der Spannung (U_{ZK}) des Zwischenkreises einstellt.

8. Antriebssystem nach einem der Ansprüche 1 bis 7, bei dem
- die dritte Stromquellenschaltung (3) wenigstens eine Diode (33) und eine Regelschaltung (32) für die Ladeleistung aufweist,
- die Diode (33) in Durchlassrichtung zwischen eine Stromquelle (34) und den Zwischenkreis (5) geschaltet ist,
- die Regelschaltung (32) parallel zur Diode (33) zwischen die Stromquelle (34) und den Zwischenkreis (5) geschaltet ist.

9. Antriebssystem nach Anspruch 8, bei dem die erste Stromquellenschaltung (1) an dem Verbindungsknoten (K) zwischen Stromquelle (34) und Diode (33) angeschlossen ist.

10. Antriebssystem nach einem der Ansprüche 1 bis 7, bei dem
- die dritte Stromquellenschaltung (3) eine Regelschaltung (32) für die Ladeleistung aufweist, die zwischen eine Stromquelle (34) und den Zwischenkreis (5) geschaltet ist,
- die Regelschaltung (32) derart ausgebildet ist, dass eine Einspeisung von der Stromquelle (34) in den Zwischenkreis (5) geregelt in Abhängigkeit eines Ladezustands der zweiten Stromquellenschaltung (2) erfolgt.

11. Antriebssystem nach Anspruch 10, bei dem die erste Stromquellenschaltung (1) an dem Verbindungsknoten (K) zwischen Stromquelle (34) und Regelschaltung (32) angeschlossen ist.

12. Verfahren zum Betrieb eines Antriebssystems für ein elektrisch betriebenes Fahrzeug, das umfasst:
- eine motorisch und generatorisch betreibbare elektrische Antriebseinheit (4),
- eine erste Stromquellenschaltung (1), eine zweite ladbare und entladbare Stromquellenschaltung (2) mit wenigstens einem Kondesator (21), die parallel zur Antriebseinheit (4) geschaltet ist, und eine dritte ladbare und entladbare Stromquellenschaltung (3) mit wenigstens einer Batterie (34), die mit dem Zwischenkreis (5) verbunden ist,
- einen elektrischen Zwischenkreis (5), der mit der ersten und der zweiten Stromquellenschaltung (1, 2) und mit der Antriebseinheit (4) verbunden ist, mit den folgenden Schritten:
- es wird eine elektrische Spannung (U_{ZK}) des Zwischenkreises und ein Kennwert der Fahrzeuggeschwindigkeit (v) erfasst,
- es wird ein Sollwert (U_{ZKsoll}) für eine Spannung des Zwischenkreises in Abhängigkeit des Kennwertes der Fahrzeuggeschwindigkeit (v) eingestellt,
- es wird die Spannung (U_{ZK}) des Zwischenkreises dem Sollwert (U_{ZKsoll}) für die Spannung des Zwischenkreises nachgeführt, wobei die Leistungsabgabe der ersten Stromquellenschaltung (1) entsprechend eingestellt wird.
- es wird die dritte Stromquellenschaltung (3) derart betrieben, dass die dritte Stromquellenschaltung (3) Leistung in den Zwischenkreis (5) einspeist, wenn ein Schwellenwert (U_{Bmax}) der Spannung (U_{ZK}) des Zwischenkreises erreicht oder unterschritten wird.

13. Verfahren nach Anspruch 12, bei dem der Sollwert (U_{ZKsoll}) für die Spannung des Zwischenkreises bei sinkender Fahrzeuggeschwindigkeit (v) erhöht und bei ansteigender Fahrzeuggeschwindigkeit (v) erniedrigt wird.

14. Verfahren nach einem der Ansprüche 12 oder 13, bei dem der Sollwert (U_{ZK soll}) für die Spannung des Zwischenkreises entlang einer linearen Kennline in Abhängigkeit des Kennwertes der Fahrzeuggeschwindigkeit (v) eingestellt wird.

15. Verfahren nach einem der Ansprüche 12 bis 14, bei dem eine Ladeleistung der dritten Stromquellenschaltung (3) in Abhängigkeit der Spannung (U_{ZK}) des Zwischenkreises eingestellt wird.

16. Verfahren nach einem der Ansprüche 12 bis 15, bei dem eine Ladeleistung der dritten Stromquellenschaltung (3) in Abhängigkeit deren Ladezustands eingestellt wird.

17. Fahrzeug mit einem elektrischen Hybridantrieb umfassend ein elektrisches Antriebssystem nach einem der Ansprüche 1 bis 11.

## Claims

1. A drive system for an electrically operated vehicle, comprising:
- an electric drive unit (4) which can be operated as a motor and as a generator,
- a first power source circuit (1) with a control device (14) for the purpose of controllably outputting power,
- a second chargeable and dischargeable power source circuit (2) having at least one capacitor (21) and which is connected in parallel to the drive unit (4),
- an electric intermediate circuit (5) which is connected to the first and the second power source circuit (1, 2) and to the drive unit (4),
- a third chargeable and dischargeable power source circuit (3) with at least one battery (34) and which is connected to the intermediate circuit (5),
- a first detection device (11) for an electrical voltage (U_{zk}) of the intermediate circuit, which detection device (11) is connected to the control device (14),
- a second detection device (12) for a characteristic value of the vehicle speed (v) which is connected to the control device (14),
- in which the control device (14) is arranged in such a way that it sets a modifiable setpoint value (U_{ZKsoll}) for a voltage of the intermediate circuit as a function of the characteristic value of the vehicle speed (v) and sets the power output of the first power source circuit (1) as a function of the setpoint value (U_{ZKsoll}) and the voltage (U_{ZK}) of the intermediate circuit,
- in which the third power source circuit (3) is connected to the intermediate circuit (5) in such a way that the third power source circuit (5) feeds power into the intermediate circuit (5) if a threshold value (U_{B-max}) of the voltage (U_{ZK}) of the intermediate circuit is reached or undershot.

2. The drive system as claimed in claim 1, in which the control device (14) increases the setpoint value (U_{ZKsoll}) for the voltage of the intermediate circuit when the vehicle speed (v) drops and decreases the setpoint value (U_{ZK-soll}) when the vehicle speed (v) rises.

3. The drive system as claimed in claim 1, in which the control device (14) sets the setpoint value (U_{ZKsoll}) for the voltage of the intermediate circuit to a maximum value (max) if the vehicle is in a stationary state, and to a minimum value (min) if the vehicle speed (v) is at a maximum.

4. The drive system as claimed in claim 3, in which the control device (14) sets a setpoint value (U_{ZKsoll}) between the maximum and the minimum value (max, min) along a linear characteristic curve as a function of the characteristic value of the vehicle speed (v).

5. The drive system as claimed in claim in one of claims 1 to 4, in which
- the first power source circuit (1) comprises at least one fuel cell (15) which generates electric power by means of an electrochemical reaction,
- the second power source circuit (2) comprises a store for storing electrical charges.

6. The drive system as claimed in one of claims 1 to 5, in which
- a third detection device (13) is provided which detects a charge state of the third power source circuit (3) and which is connected to the control device (14),
- the control device (14) sets the power output in such a way that the power output is reduced the higher the level of the stored charge in the third power source circuit (3) is.

7. The drive system as claimed in one of claims 1 to 6, in which
- the third power source circuit (3) has a closed-loop control circuit (32) for the charge power, which closed-loop control circuit (32) is connected to the first detection device (11, 31)and which sets the charge power as a function of the voltage (U_{ZK}) of the intermediate circuit.

8. The drive system as claimed in one of claims 1 to 7, in which
- the third power source circuit (3) has at least one diode (32) and a closed-loop control circuit (32) for the charge power,
- the diode (33) is connected in the forward direction between a power source (34) and the intermediate circuit (5),
- the closed-loop control circuit (32) is connected parallel to the diode (33) between the power source (34) and the intermediate circuit (5).

9. The drive system as claimed in claim 8 in which the first power source circuit (1) is connected to the connection node (K) between the power source (34) and diode (33).

10. The drive system as claimed in one of claims 1 to 7, in which
- the third power source circuit (3) has a closed-loop control circuit (32) for the charge power, which closed-loop control circuit (32) is connected between a power source (34) and the intermediate circuit (5),
- the closed-loop control circuit (32) is arranged in such a way that current is fed from the power source (34) into the intermediate circuit (5) under closed-loop control as a function of a charge state of the second power source circuit (2).

11. The drive system as claimed in claim 10, in which the first power source circuit (1) is connected to the connection node (K) between the power source (34) and the closed-loop control circuit (32).

12. A method for operating a drive system for an electrically operated vehicle, which comprises:
- an electric drive unit (4) which can be operated as a motor and as a generator,
- a first power source circuit (1), a second chargeable and dischargeable power source circuit (2) having at least one capacitor (21) and which is connected in parallel to the drive unit (4), and a third chargeable and dischargeable power source circuit (3) with at least one battery (34) and which is connected to an electric intermediate circuit (5),
- the electric intermediate circuit (5) connected to the first and second power source circuits (1, 2) and to the drive unit (4),
having the following steps:
- an electrical voltage (U_{ZK}) of the intermediate circuit and a characteristic value of the vehicle speed (v) are sensed,
- a setpoint value (U_{ZKsoll}) for a voltage of the intermediate circuit is set as a function of the characteristic value of the vehicle speed (v),
- the voltage (U_{ZK}) of the intermediate circuit is made to follow the setpoint value (U_{ZKsoll}) for the voltage of the intermediate circuit, wherein the power output of the first power source circuit (1) is correspondingly set,
- the third power source circuit (3) is operated in such a way that the third power source circuit (3) feeds power into the intermediate circuit (5) if a threshold value (U_{Bmax}) of the voltage (U_{ZK}) of the intermediate circuit is reached or undershot.

13. The method as claimed in claim 12, in which the setpoint value (U_{ZKsoll}) for the voltage of the intermediate circuit is increased when the vehicle speed (v) drops, and is decreased when the vehicle speed (v) rises.

14. The method as claimed in one of claims 12 or 13, in which the setpoint value (U_{ZKsoll}) for the voltage of the intermediate circuit is set along a linear characteristic curve as a function of the characteristic value of the vehicle speed (3).

15. The method as claimed in one of claims 12 to 14, in which a charge power of the third power source circuit (3) is set as a function of the voltage (U_{ZK}) of the intermediate circuit.

16. The method as claimed in one of claims 12 to 15, in which a charge power of the third power source circuit (3) is set as a function of its charge state.

17. A vehicle having an electric hybrid drive comprising an electric drive system as claimed in one of claims 1 to 11.

## Revendications

1. Système d'entraînement pour un véhicule fonctionnant en mode d'entraînement électrique, comprenant :
- une unité d'entraînement électrique (4) pouvant fonctionner en mode moteur et en mode générateur,
- un premier circuit de source de courant (1) comportant un dispositif de commande (14) à des fins d'une puissance débitée pouvant être réglée,
- un deuxième circuit de source de courant (2) pouvant être chargé et déchargé et comprenant au moins un condensateur (21), ce circuit étant monté en parallèle avec l'unité d'entraînement (4),
- un circuit électrique intermédiaire (5) qui est relié au premier et au deuxième circuit de source de courant (1, 2) et au circuit intermédiaire (5),
- un troisième circuit de source de courant (3) pouvant être chargé et déchargé et comportant au moins une batterie (34), ce circuit étant relié au circuit intermédiaire (5),
- un premier dispositif de relevé (11) pour une tension électrique (U_{ZK}) du circuit intermédiaire, qui est relié au dispositif de commande (14),
- un deuxième dispositif de relevé (12) pour une valeur caractéristique de la vitesse de véhicule (v), qui est relié au dispositif de commande (14),
- système dans lequel le dispositif de commande (14) est réalisé de façon à ce qu'il règle une valeur de consigne (U_{ZKcons}) pouvant être modifiée, pour une tension du circuit intermédiaire, en fonction de la valeur caractéristique de la vitesse de véhicule (v), et qu'il règle la puissance débitée du premier circuit de source de courant (1) en fonction de la valeur de consigne (U_{ZKcons}) et de la tension (U_{ZK}) du circuit intermédiaire,
- et dans lequel le troisième circuit de source de courant (3) est mis en circuit avec le circuit intermédiaire (5) de façon à ce que le troisième circuit de source de courant (3) délivre de la puissance au circuit intermédiaire (5) lorsqu'on atteint ou passe sous une valeur de seuil (U_{Bmax}) de la tension (U_{ZK}) du circuit intermédiaire.

2. Système d'entraînement selon la revendication 1, dans lequel le dispositif de commande (14) augmente la valeur de consigne (U_{ZKcons}) pour la tension du circuit intermédiaire lorsque la vitesse de véhicule (v) est décroissante, et la diminue lorsque la vitesse de véhicule (v) est croissante.

3. Système d'entraînement selon la revendication 1 ou 2, dans lequel le dispositif de commande (14) règle la valeur de consigne (U_{ZKcons}) pour la tension du circuit intermédiaire à une valeur maximale (max) lorsque le véhicule se trouve à l'arrêt, et à une valeur minimale (min) lorsque la vitesse de véhicule (v) est maximale.

4. Système d'entraînement selon la revendication 3, dans lequel le dispositif de commande (14) règle une valeur de consigne (U_{ZKcons}) entre la valeur maximale et la valeur minimale (max, min), le long d'une ligne caractéristique linéaire, en fonction de la valeur caractéristique de la vitesse de véhicule (v).

5. Système d'entraînement selon l'une des revendications 1 à 4, dans lequel
- le premier circuit de source de courant (1) englobe au moins une pile à combustible (15,) qui produit de la puissance électrique au moyen d'une réaction électrochimique,
- le deuxième circuit de source de courant (2) comprend un accumulateur pour le stockage de charges électriques.

6. Système d'entraînement selon l'une des revendications 1 à 5, dans lequel
- il est prévu un troisième dispositif de relevé (13) qui relève un état de charge du troisième circuit de source de courant (3) et qui est relié au dispositif de commande (14),
- le dispositif de commande (14) règle la puissance débitée de façon à réduire la puissance débitée plus la charge accumulée est élevée dans le troisième circuit de source de courant (3).

7. Système d'entraînement selon l'une des revendications 1 à 6, dans lequel le troisième circuit de source de courant (3) comprend un circuit de régulation (32) pour la puissance de charge, qui est relié au premier dispositif de relevé (11, 31) et règle la puissance de charge en fonction de la tension (U_{ZK}) du circuit intermédiaire.

8. Système d'entraînement selon l'une des revendications 1 à 7, dans lequel
- le troisième circuit de source de courant (3) comprend au moins une diode (33) et un circuit de régulation (32) pour la puissance de charge,
- la diode (33) est montée en direction passante entre une source de courant (34) et le circuit intermédiaire (5),
- le circuit de régulation (32) est monté en parallèle à la diode (33) entre la source de courant (34) et le circuit intermédiaire (5).

9. Système d'entraînement selon la revendication 8, dans lequel le premier circuit de source de courant (1) est raccordé au point de connexion (K) entre la source de courant (34) et la diode (33).

10. Système d'entraînement selon l'une des revendications 1 à 7, dans lequel
- le troisième circuit de source de courant (3) comprend un circuit de régulation (32) pour la puissance de charge, qui est monté entre la source de courant (34) et le circuit intermédiaire (5),
- le circuit de régulation (32) est conçu de façon à ce qu'il se produise une alimentation du circuit intermédiaire (5) par la source de courant (34) de manière régulée en fonction d'un état de charge du deuxième circuit de source de courant (2).

11. Système d'entraînement selon la revendication 10, dans lequel le premier circuit de source de courant (1) est raccordé au point de connexion (K) entre la source de courant (34) et le circuit de régulation (32).

12. Procédé de fonctionnement d'un système d'entraînement pour un véhicule fonctionnant en mode d'entraînement électrique et comprenant :
- une unité d'entraînement électrique (4) pouvant fonctionner en mode moteur et en mode générateur,
- un premier circuit de source de courant (1), un deuxième circuit de source de courant (2) pouvant être chargé et déchargé, comprenant au moins un condensateur (21), et monté en parallèle avec l'unité d'entraînement (4), ainsi qu'un troisième circuit de source de courant (3) pouvant être chargé et déchargé, comprenant au moins une batterie (34), et relié au circuit intermédiaire (5),
- un circuit électrique intermédiaire (5), qui est relié au premier et au deuxième circuit de source de courant (1, 2), et à l'unité d'entraînement (4), le procédé présentant les étapes suivantes :
- on relève une tension électrique (U_{ZK}) du circuit intermédiaire et une valeur caractéristique de la vitesse de véhicule (v),
- on règle une valeur de consigne (U_{ZKcons}) pour une tension du circuit intermédiaire en fonction de la valeur caractéristique de la vitesse de véhicule (v),
- on ajuste en poursuite la tension (U_{ZK}) du circuit intermédiaire à la valeur de consigne (U_{ZKcons}) pour la tension du circuit intermédiaire, la puissance débitée du premier circuit de source de courant (1) étant réglée de manière correspondante,
- on fait fonctionner le troisième circuit de source de courant (3) de manière à ce que ce troisième circuit de source de courant (3) délivre de la puissance au circuit intermédiaire (5) lorsqu'on atteint ou passe sous une valeur de seuil (U_{Bmax}) de la tension (U_{ZK}) du circuit intermédiaire.

13. Procédé selon la revendication 12, d'après lequel la valeur de consigne (U_{ZKcons}) pour la tension du circuit intermédiaire est augmentée lorsque la vitesse de véhicule (v) est décroissante, et est diminuée lorsque la vitesse de véhicule (v) est croissante.

14. Procédé selon l'une des revendications 12 ou 13, d'après lequel la valeur de consigne (U_{ZKcons}) pour la tension du circuit intermédiaire, est réglée le long d'une ligne caractéristique linéaire en fonction de la valeur caractéristique de la vitesse de véhicule (v).

15. Procédé selon l'une des revendications 12 à 14, d'après lequel une puissance de charge du troisième circuit de source de courant (3) est réglée en fonction de la tension (U_{ZK}) du circuit intermédiaire.

16. Procédé selon l'une des revendications 12 à 15, d'après lequel une puissance de charge du troisième circuit de source de courant (3) est réglée en fonction de son état de charge.

17. Véhicule comprenant un entraînement hybride électrique englobant un système d'entraînement selon l'une des revendications 1 à 11.
